(19) Europäisches Patentamt

European Patent Office

Office européen des brevets

(11) Veröffentlichungsnummer: **0 373 426 B1**

(12) **EUROPÄISCHE PATENTSCHRIFT**

(45) Veröffentlichungstag der Patentschrift: **03.11.93**

(21) Anmeldenummer: **89122113.7**

(22) Anmeldetag: **30.11.89**

(51) Int. Cl.⁵: **C09C 3/12**, C09C 1/36, C09C 1/24, G11B 5/71, C08K 9/06

(54) **Anorganische Pigmente mit Polyorganosiloxanbeschichtung.**

(30) Priorität: **13.12.88 DE 3841848**

(43) Veröffentlichungstag der Anmeldung:
**20.06.90 Patentblatt 90/25**

(45) Bekanntmachung des Hinweises auf die
Patenterteilung:
**03.11.93 Patentblatt 93/44**

(84) Benannte Vertragsstaaten:
**AT BE DE FR GB IT NL**

(56) Entgegenhaltungen:
**EP-A- 0 023 265**
**EP-A- 0 257 423**
**DE-A- 3 211 976**

(73) Patentinhaber: **BAYER AG**

**D-51368 Leverkusen(DE)**

(72) Erfinder: **Burow, Wilfried,Dr.**
**Glindholzstrasse 100**
**D-4150 Krefeld(DE)**
Erfinder: **Kischkewitz, Jürgen, Dr.**
**Vogelsangweg 38**
**D-4030 Ratingen 6(DE)**
Erfinder: **Schlak, Ottfried, Dr.**
**Kalkweg 2**
**D-5000 Köln 80(DE)**

**Beschreibung**

Die vorliegende Erfindung betrifft anorganische Pigmente mit verbesserten Eigenschaften, ihre Herstellung sowie ihre Verwendung zur Einarbeitung in Lacke, Dispersionsfarben, Kunststoffe, Toner, magnetische Aufzeichnungsmaterialien, Baustoffe und Emails.

Anorganische Pigmente, wie z. B. Chromoxide, Chromat-und Molybdatpigmente, Eisenoxide, Rutil- oder Spinellmischphasen und Ultramarinpigmente sowie Weißpigmente werden allgemein zur Einfärbung von Lacken, Kunststoffen und Baustoffen oder als Farbkörper zur Einfärbung von Email und Keramik verwendet. Allgemein werden sie vor oder während der Mahlung mit geringen Zusätzen an oberflächenaktiven Stoffen behandelt, die die Mahl- und Pigmenteigenschaften der hydrophilen Pigmente verbessern sollen.

Für jene Einsatzgebiete der anorganischen Pigmente, bei denen hydrophobe oder lipophile Pigmentoberflächen erforderlich sind, z. B. bei Pigmenten zur Kunststoffeinfärbung oder zur Verwendung in magnetischen Aufzeichnungsmaterialien werden als oberflächenaktive Beschichtungsstoffe Fettsäuren und Fettsäureester, Alkylamine, Vinylpolymere, Silicone usw. eingesetzt.

Aus der Gruppe der Silicone werden seit langem Polydimethyl- oder Polydiphenyl-siloxane als Beschichtungsmaterialien verwendet. Nachteilig ist, daß sich diese Beschichtungsstoffe mit der Zeit von der Pigmentoberfläche ablösen können. Deshalb wurde vorgeschlagen, zur Hydrophobierung von Baustoffen (W. Noll, Chemie und Technik der Silicone, S. 524, Weinheim 1968) oder zur Hydrophobierung von Füllstoffen (US 2 891 875, US 2 891 923) wäßrige Suspensionen aus Gemischen von Siliconöl und wasserlöslichen Silikaten einzusetzen, wobei die Silikate als Haftungsvermittler zwischen Siliconöl und der Oberfläche der zu beschichtenden anorganischen Stoffe wirken sollen.

Diese silikathaltige Beschichtung ist ungeeignet für anorganische Pigmente, da die silikathaltige Beschichtung die Verarbeitungseigenschaften der Pigmente in Lacken verschlechtert.

Um auf der Pigmentoberfläche konstant haftende Beschichtungen zu erzielen, sind zahlreiche Systeme vorgeschlagen worden, die keine aufwendige Doppelbeschichtung Silikat / Siliconöl benötigen.

So wird in der EP 0 273 867 ein Mittel zur Verbesserung der hydrophoben Eigenschaften anorganischer Materialien beschrieben, das aus einem Alkyltrialkoxysilan und einem Alkohol oder Kohlenwasserstoff als Lösungsmittel besteht und gegebenenfalls einen Hydrolysekatalysator enthält. Das Mittel wird chemisch mit der Oberfläche des zu hydrophobierenden anorganischen Materials verknüpft, und die Alkoxysilane kondensieren zu einem polymeren Überzug.

In der US 3 849 152 wird die Umkapselung von Pigmenten mit Silikonölen beschrieben, die aktive Gruppen zur Bindungsbildung mit der Pigmentoberfläche enthalten und bei der Beschichtung in situ zu einem festen Überzug polymerisieren. Diese Polysiloxane enthalten bevorzugt terminale H-Atome, OH-Gruppen und Alkoxygruppen und setzen bei der Beschichtung u. a. Alkohole und Wasserstoff frei.

Auch die aus der EP 257 423 bekannten Polysiloxane, die ebenfalls der Beschichtung von Pigmenten und Füllstoffen dienen, bilden Wasserstoff. Diese Wasserstoffbildung führt zu erheblichen technischen Problemen bei der Herstellung derart beschichteter Pigmente.

In der DE 2 543 962 wird ein Verfahren zur Verbesserung der Dispergiereigenschaften von Eisenoxidmagnetpigmenten beschrieben, indem z. B. eine Suspension aus Eisenoxidpigment und ammoniakalischem Ethanol und Alkoxysilan unter Rückfluß gekocht und mehrere Stunden bei hohen Temperaturen getrocknet wird.

In der GB 959 211 werden Kompositionen von Polyamidfasern beschrieben, die Füllstoffe oder anorganische Pigmente enthalten, welche mit siliciumorganischen Verbindungen beschichtet sein können. Für die Verwendung der Füllstoffe oder anorganischen Pigmente in Polyamidfasern ist es unwichtig, mit welchen siliciumorganischen Verbindungen sie beschichtet worden sind. Für anorganische Pigmente, die in Lacken, Dispersionsfarben, Kunststoffen, Tonern, magnetischen Aufzeichnungsmaterialien, Baustoffen und Emails eingearbeitet werden, ist hingegen die Art der Oberflächenbeschichtung sehr wichtig. So ist das in der GB 959 211 beispielshaft verwendete Octamethylcyclotetrasiloxan wegen seiner schlechten Haftungseigenschaft zur Beschichtung von anorganischen Pigmenten, die in Lacken, Dispersionsfarben, Kunststoffen, etc. Verwendung finden, ungeeignet.

Organopolysiloxane mit Alkyl- oder Arylgruppen, deren Anzahl an Kohlenstoffatomen höchstens 8, jedoch bevorzugt 1 beträgt, werden in der DE 3 537 415 als Hydrophobierungsmittel von Titandioxid beschrieben, welches zur Einfärbung photographischer Papierträger verwendet wird. Solche Organopolysiloxane mit kurzen Seitengruppen sind zur Beschichtung von anorganischen Pigmenten ungeeignet, da sie das Pigment unzureichend vor Feuchtigkeitsaufnahme schützen und so beschichtete Pigmente stark stauben.

Alle genannten Beschichtungen und Beschichtungsverfahren sind unbefriedigend, weil sie zu technisch unbefriedigenden Lösungen führen oder durch den Beschichtungsprozeß die Umwelt belasten. Der Beschichtungsprozeß sollte so erfolgen, daß auf den Zusatz von Lösungsmitteln, die anschließend abgetrennt werden müssen, verzichtet werden kann.

Auch eine chemische Verknüpfung des Beschichtungsstoffes mit der Pigmentoberfläche unter gleichzeitiger Abspaltung von Stoffen wie z. B. Alkoholen, Aminen, Halogenwasserstoffen oder Wasserstoff ist zu vermeiden.

Die beschichteten Pigmente müssen außerdem hinsichtlich der Beständigkeit ihrer Pigmenteigenschaften und der Haftung ihrer Oberflächenbeschichtung hohen Ansprüchen genügen.

Der Pigmentverarbeiter erwartet, daß die zur Einfärbung vorgesehenen, gemahlenen Pigmente unabhängig von der Dauer und Art der Lagerung und unabhängig von Temperatur- und Witterungseinflüssen bei Transport und Lagerung günstige farbgebende Eigenschaften, ausreichende Mahlfeinheit und Dispergierbarkeit, gute Lack-, Baustoff-und Kunststoffverträglichkeit besitzen.

Daher besteht ein Bedarf an hydrophilen oder hydrophoben anorganischen Pigmenten mit stabiler Oberflächenbeschichtung, die bei Lagerung nicht ihre günstigen Pigmenteigenschaften verlieren und deren Beschichtung sich nicht von der Pigmentoberfläche ablöst oder zersetzt.

Aufgabe war es daher, beschichtete Pigmente zur Verfügung zu stellen, die die oben genannten Nachteile nicht aufweisen.

Überraschenderweise wurde gefunden, daß die nachfolgend beschriebenen erfindungsgemäßen Pigmente die an sie gestellten Aufgaben erfüllen, und man überraschenderweise lagerstabile Pigmente mit günstigen Verarbeitungseigenschaften zur Einfärbung von Lacken, Kunststoffen, Baustoffen, Email und Keramik erhält, die außerdem verbessertes Fließ- und Mahlverhalten beim Mahlprozeß aufweisen.

Die erfindungsgemäßen anorganischen Farb- und Magnetpigmente weisen einen Gehalt von mindestens 0,1 Gew.-% und höchstens 5 Gew.-% an einem oder mehreren Polyorganosiloxanen auf und zeichnen sich dadurch aus, daß die Polyorganosiloxane Viskositäten von 10 bis 100.000 mPa.s und eine relative Molmasse von 500 bis 500.000 aufweisen, keine reaktiven oder vernetzend wirkenden Gruppen enthalten, pro Molekül mindestens eine Si-Alkyl- und/oder Si-Aryl-Gruppe mit 9 bis 25 C-Atomen enthalten, wobei diese Gruppen zu 7 bis 70 Gew.-% im Polyorganosiloxan vorhanden sind, und die übrigen Organoreste im Polyorganosiloxan 1 bis 8 C-Atome aufweisen.

Besonders bevorzugt sind Polyorganosiloxane, die pro Molekül mindestens eine Si-Alkyl- und/oder Si-Aryl-Gruppe mit 11 bis 20 C-Atomen enthalten.

In einer weiteren Ausführungsform sind die Si-Alkyl-und/oder Si-Aryl-Gruppen zu 20 bis 50 Gew.-% im Polyorganosiloxan vorhanden.

Vorzugsweise sind die übrigen Organoreste im Polyorganosiloxan Methylreste.

Polyorganosiloxane, die pro Molekül mindestens eine Si-Alkylgruppe mit einem geradkettigen Alkylrest mit 11 bis 20 C-Atomen enthalten, sind bevorzugt.

Die anorganischen Pigmente können Weißpigmente wie z. B. $TiO_2$-Pigmente oder Buntpigmente wie z. B. $Fe_2O_3$-Pigmente sein.

Die Polyorganosiloxane werden vor oder während der Trocknung oder vor oder während der Mahlung den Pigmenten zugegeben.

Zur Beschichtung der anorganischen Pigmente können alle bekannten Verfahren angewendet werden, die zu einem haftenden Überzug der Polyorganosiloxane auf dem Basispigment führen.

Zu diesen Verfahren gehören z. B. das lösungsmittelfreie Aufmahlen oder Aufsprühen der oben genannten Verbindungen auf die Pigmente, wobei es sich bei der Beschichtung um eine oder mehrere Verbindungen aus der oben genannten Gruppe der erfindungsgemäßen Beschichtungsstoffe oder um eine Kombination dieser Beschichtungsstoffe mit handelsüblichen, chemisch inaktiven Beschichtungsstoffen handeln kann.

Zur Oberflächenbeschichtung kann man entweder von Pigmentpasten ausgehen, denen man vor der Trocknung das Oberflächenbehandlungsmittel zufügt, oder bevorzugt von Trockengut, dem man vor der Mahlung die siliciumorganische Verbindung zumischt. Entscheidend ist für die Nachbehandlung, daß man das Beschichtungsmaterial möglichst homogen auf die Pigmentoberfläche aufzieht, wobei es dem Fachmann überlassen bleibt, nach welchem Verfahren das Pigment oberflächlich beschichtet wird.

Für die Beschichtung ist es unerheblich, welcher Natur das zur Beschichtung vorgesehene Pigment ist, ob es sich z. B. um ein Eisenoxid oder Chromoxid handelt, ob es z B. eine Spinell- oder Rutilphase ist, ob das Basispigment unbeschichtet, organisch oder anorganisch umhüllt ist. Eine anorganische Umhüllung des Basispigmentes ist z. B. in jenen Fällen erforderlich, bei denen es sich bei dem Basispigment um ein Eisenoxidgelbpigment handelt, das durch anorganische Beschichtung hitzestabilisiert wird.

Eine besondere Ausführungsform der Erfindung besteht daher in der Oberflächenbehandlung organisch oder anorganisch beschichteter Pigmente mit den genannten erfindungsgemäßen Polyorganosiloxanen.

Da es sich bei den erfindungsgemäßen Beschichtungsstoffen um gut an der Pigmentoberfläche haftende Verbindungen handelt, sind jede Art von Trocknung der beschichteten Pigmentpaste wie z. B. Sprühtrocknung oder Bandtrocknung möglich und jede Art von Mahlung denkbar, z. B. Mahlung in einer Perlmühle, Strahlmühle, Stift-oder Pendelmühle, ohne daß die erfindungsgemäße Beschichtung Schaden nimmt.

Durch die Wahl der Zusatzmenge an hydrophobierendem Polyorganosiloxan kann der hydrophile Charakter der Pigmentoberfläche der unbehandelten anorganischen Pigmente in Richtung hydrophil/hydrophob bis hin zu rein hydrophobem Charakter eingestellt werden.

Weiterhin wurde überraschenderweise gefunden, daß die erfindungsgemäßen Pigmente, nachdem sie einem Granulationsverfahren (z.B. Zerstäubungstrocknung) unterworfen wurden, neben den Vorteilen eines sehr guten Fließverhaltens bei sehr geringer Staubneigung eine bessere Dispergierbarkeit in Kunststoffen als herkömmliche granulierte Pigmente besitzen.

Bei der Herstellung von granulierten Pigmenten wird die erfindungsgemäße Verbindung dem Pigment vor und/oder während der Zerstäubungstrocknung zugesetzt. Bevorzugt wird die siliciumorganische Verbindung einer Pigmentaufschlämmung vor der Zerstäubungstrocknung zugemischt. Dabei kann die siliciumorganische Verbindung vorher in eine Emulsion überführt oder direkt in die Pigmentaufschlämmung eingerührt werden.

Die Pigmentaufschlämmung kann ausschließlich aus Pigment und einer verdampfbaren Flüssigkeit, z.B. Wasser, bestehen und zwar in einem Mengenverhältnis, das eine pump- und zerstäubbare Aufschlämmung ergibt. Werden höhere Pigmentgehalte gewünscht, kann die erforderliche Viskositätserniedrigung durch Zusatz von verflüssigend wirkenden Substanzen, wie beispielsweise Polyphosphaten, Ameisensäure und Polyacrylaten unterschiedlicher Molekulargewichtsverteilung erreicht werden.

Die Zerstäubungstrocknung wird in an sich bekannter Weise durchgeführt. Es ist gleichgültig, ob die Zerstäubung mittels Ein- oder Zweistoffdüsen oder mit rotierenden Zerstäuberscheiben erfolgt.

Die erfindungsgemäß mit Polyorganosiloxanen beschichteten Pigmente werden zur Einarbeitung in lipophile Medien, Toner, magnetische Aufzeichnungsmaterialien und Kunststoffe verwendet.

Außerdem werden die erfindungsgemäßen Pigmente in Lacke, Baustoffe, keramische Materialien und Dispersionsfarben eingearbeitet.

Die für die Beschichtung der Pigmente eingesetzten Polyorganosiloxane sind seit langem bekannt und ihre Herstellung kann z.B. nach W. Noll. Chemie und Technologie der Silicone, 2. Auflage, 1968, S. 48, erfolgen.

Nachfolgend wird die Erfindung beispielhaft beschrieben, ohne daß hierin eine Einschränkung der Erfindung auf die Beispiele zu sehen ist.

Als Basismaterialien für die Beschichtung wurden folgende Pigmente eingesetzt:

A: Bayferrox 110 M, Handelsprodukt der Bayer AG, Eisenoxidrotpitment

B: Bayferrox 105 M, Handelsprodukt der Bayer AG, helles Eisenoxidrotpigment

C: Bayferrox AC 5069, Handelsprodukt der Bayer AG, Hitzestabiles Eisenoxidgelbpigment

D: Bayferrox PK 5079, Handelsprodukt der Bayer AG, flockungsstabiles Eisenoxidrotpigment

E: Lichtgelb 5R, Handelsprodukt der Bayer AG, Lichtechtpigment

F: Bayertitan R-FK-2, Handelsprodukt der Bayer AG, feinteiliges Titandioxidweißpigment,

G: Bayertitan R-FK-3, Handelsprodukt der Bayer AG, wetterstabiles, feinteiliges Titandioxidweißpigment

H: Bayertitan R-FK-21, Handelsprodukt der Bayer AG, granuliertes Titandioxidweißpigment

Folgende erfindungsgemäße Zusatzstoffe wurden eingesetzt:

Siliconöle der Formel

$Me_3SiO[MeRSiO]_x[Me_2SiO]_ySiMe_3$:

1: $x = 5$; $y = 20$; $R = n\text{-}C_{12}H_{25}$, $n\text{-}C_{14}H_{29}$ im Verhältnis 2:1

2: $x = 5$; $y = 20$; $R = n\text{-}C_{18}H_{37}$

3: $x = 30$; $y = 90$; $R =$ zu gleichen Molmengen: $n\text{-}C_5H_{11}$, $n\text{-}C_6H_{13}$; $n\text{-}C_8\text{-}H_{17}$, $n\text{-}C_{10}H_{21}$, $n\text{-}C_{12}H_{25}$, $n\text{-}C_{14}H_{29}$, $n\text{-}C_{18}H_{37}$

4: $x = 30$; $y = 90$; $R = \text{-}CH_2\text{-}CH\text{-}(Me)Ph$

Me = Methyl, Ph = Phenyl

Als Oberflächenbeschichtungsmaterialien für die Vergleichsversuche wurden eingesetzt:

X1: Siliconöl der Formel: $Me_3SiO[Me_2SiO]_xSiMe_3$ $x = 80 - 90$

X2: Siliconöl der Formel: $Me_3SiO[MeRSiO]_8[HMeSiO]_{22}SiMe_3$

$R = n\text{-}C_{12}H_{25}$, $n\text{-}C_{14}\text{-}H_{29}$ im Verhältnis 2:1

Me = Methyl

EP 0 373 426 B1

Zur Prüfung der Eigenschaften der mit herkömmlichen oder erfindungsgemäßen Oberflächenbeschichtungsmaterialien behandelten Pigmente wurde in einem Mischaggregat eine homogene Mischung bestehend aus dem ungemahlenen Basispigment und dem Zusatzstoff in einer Mischzeit von mindestens einer Stunde hergestellt und die Mischung anschließend wie aus den Tabellen 1 und 2 ersichtlich abgemahlen. Diese gemahlenen Produkte wurden in den nachfolgend beschriebenen Versuchen eingesetzt (Tabelle 3 ff.).

**Tabelle 1: Erfindungsgemäß oberflächenbeschichtete Pigmente**

| Beispiel Nr. | Basis-pigment | Zusatz-stoff | Zusatzmenge Gew.-% | Mühle |
|---|---|---|---|---|
| A1 | A | 1 | 0,2 | Strahlmühle |
| A2 | A | 1 | 0,5 | Strahlmühle |
| A3 | A | 1 | 0,5 | Pendelmühle |
| A4 | A | 1 | 1,0 | Scheibenschwingmühle |
| A5 | A | 2 | 0,5 | Scheibenschwingmühle |
| A6 | A | 3 | 0,5 | Scheibenschwingmühle |
| A7 | A | 4 | 0,5 | Scheibenschwingmühle |
| B1 | B | 1 | 0,2 | Strahlmühle |
| B2 | B | 1 | 0,5 | Strahlmühle |
| C1 | C | 1 | 1,0 | Strahlmühle |
| D1 | D | 1 | 0,5 | Strahlmühle |
| E1 | E | 1 | 1,0 | Scheibenschwingmühle |

**Tabelle 1 (Fortsetzung)**

| Beispiel Nr. | Basis-pigment | Zusatz-stoff | Zusatzmenge Gew.-% | Mühle |
|---|---|---|---|---|
| F1 | F | 1 | 0,5 | Strahlmühle |
| F2 | F | 2 | 0,5 | Strahlmühle |
| G1 | G | 2 | 1,0 | Strahlmühle |
| H1 | H | 1 | 1,0 | Sprühtrocknung |

In der nachfolgenden Tabelle sind als Vergleich jene Pigmente enthalten, die mit herkömmlichen, handelsüblichen Beschichtungsmaterialien beschichtet wurden oder ohne Beschichtung abgemahlen wurden.

5

Tabelle 2

| Vergleichsbeispiele | | | | |
|---|---|---|---|---|
| Beispiel Nr. | Basispigment | Zusatzstoff | Zusatzmenge Gew.-% | Mühle |
| A0 | A | ./. | ./. | Strahlmühle |
| B0 | B | ./. | ./. | Strahlmühle |
| C0 | C | ./. | ./. | Strahlmühle |
| D0 | D | ./. | ./. | Strahlmühle |
| E0 | E | ./. | ./. | Scheibenschwingmühle |
| E10 | E | X1 | 1,0 | Scheibenschwingmühle |
| F10 | F | X1 | 0,5 | Strahlmühle |
| G10 | G | X1 | 1,0 | Strahlmühle |
| H0 | H | ./. | ./. | Sprühtrocknung |
| H10 | H | X2 | 1,0 | Sprühtrocknung |

Bei der Einarbeitung von Pigmenten in Lacke werden vom Lackverarbeiter günstige Eigenschaften sowohl hinsichtlich der Farbgebung als auch der Dispergierbarkeit erwartet.

Die Farbgebung wird grundsätzlich auf zwei Arten geprüft. Zum einen wird das Pigment unverdünnt in den Lack eingearbeitet, man spricht dann vom Purton, zum anderen wird das Aufhellvermögen des Pigments im Verschnitt mit einem Weißpigment beurteilt, man spricht dann von der Farbgebung in einer Weißpaste.

Die Dispergierbarkeit wird nach DIN 55203 geprüft. Diese DIN-Vorschrift hat ihren Ursprung im sogenannten Hegman-Test. Hierbei wird die Körnigkeit des Pigments in einem Grindometer bestimmt. Die angestrebte Feinteiligkeit der Pigmente drückt sich in möglichst niedrigen Grindometerwerten aus.

Der Verarbeiter erwartet von den Pigmenten, daß sie ihre günstigen Eigenschaften über einen gewissen Zeitraum (Wochen bis Monate) beibehalten. Es sollen keine Unterschiede in den Pigmenteigenschaften auftreten, ob sie nun sofort oder nach einer gewissen Lagerzeit verarbeitet werden.

Die erfindungsgemäß hergestellten Pigmente zeigen eine überraschend hohe Lagerbeständigkeit und günstige Verarbeitungseigenschaften bei ihrer Verarbeitung in Lacken, magn. Tonträgern und Tonern etc.

In den folgenden Beispielen (Tabelle 3, 4 und 5) wird die Farbgebung der erfindungsgemäß behandelten Pigmente mit derjenigen von herkömmlichen Pigmenten nach einer Lagerung verglichen. Des weiteren soll gezeigt werden, daß auch nach Lagerung eine ausreichende Feinteiligkeit der Pigmente beibehalten werden kann, d.h. daß die Forderungen des Grindometertests erfüllt werden.

Tabelle 3: Farbgebung nach Lagerung (Purton)

(Purton in Lack Alkydal F 48, Handelsprodukt der Bayer AG, Pigmentvolumenkonzentration PVK = 10 %, Bestimmung gemäß DIN 6174, äquivalent ISO/DIN 7724, 1-3 drafts, CIELAB C 2/grad)

Bezug : Farbton bei Einlagerung

| Bei-spiel | Lagerdauer | $\Delta L$ | $\Delta a$ | $\Delta b$ | | Beurteilung des Lagerverhaltens[*] |
|---|---|---|---|---|---|---|
| AO | 6 Wochen | $> 0,3$ | $< 0,5$ | $> 0,5$ | − | Vergleichs-versuch |
| A1 | 6 Wochen | $< 0,3$ | $< 0,5$ | $< 0,5$ | + | |
| A2 | 6 Wochen | $< 0,3$ | $< 0,5$ | $< 0,5$ | + | |
| BO | 4 Wochen | $0,3$ | $< 0,5$ | $> 0,5$ | − | Vergleichs-versuch |
| B1 | 4 Wochen | $< 0,3$ | $< 0,5$ | $< 0,5$ | + | |
| B2 | 4 Wochen | $< 0,3$ | $< 0,5$ | $< 0,5$ | + | |

*) Das Lagerverhalten wird positiv beurteilt, wenn keine der drei Farbabstände $\Delta L$, $\Delta a$, $\Delta b$ zum Farbort der frisch gemahlenen Pigmente außerhalb der nachfolgend genannten Beträge liegt:

$\Delta L < 0,3 \qquad \Delta a < 0,5 \qquad \Delta b < 0,5$

Tabelle 4: Farbgebung in Weißpaste nach Lagerung

(Weißverschnitt aus 90 Gew.-% Titandioxid R-KB-2, Handelsprodukt der Bayer AG, 10 Gew.-% Buntpigment, Pigmentvolumenkonzentration PVK 10 %, Lack Alkydal L 64, Handelsprodukt der Bayer AG, Bestimmung gemäß DIN 6174, äquivalent ISO / DIN 7724, 1-43 drafts, CIELAB C 2/ grad)

Bezug : Pigment bei Einlagerung

| Bei-spiel | Lagerdauer | rel. Farb-stärke | $\Delta a$ | $\Delta b$ | Beurteilung y) |
|---|---|---|---|---|---|
| AO | 6 Wochen | < 10 % | < 1,0 | > 1,0 | - Vergleichsversuch |
| A1 | 6 Wochen | < 10 % | < 1,0 | < 1,0 | + |
| A2 | 6 Wochen | < 10 % | < 1,0 | < 1,0 | + |

y) Das Lagerverhalten wird günstig beurteilt, wenn die relative Farbstärke um weniger als 10 % sowie $\Delta a$ und $\Delta b$ um weniger als 1 CIELAB - Einheit nach Lagerung gegenüber dem frisch gemahlenen Pigment abweichen.

Tabelle 5: Dispergierbarkeit im Lack nach Lagerung

Beurteilung der Körnigkeit gemäß DIN 55203
Hegman-Test (engl.)

| Bei- spiel | Lagerdauer | Grindometerwerte | Beurteilung des Lagerverhaltens[x] | |
|---|---|---|---|---|
| A0 | 6 Wochen | >20 / <35 / >40 | − | Vergleichs- versuch |
| A1 | 6 Wochen | <20 / <35 / <40 | + | |
| A2 | 6 Wochen | <20 / <35 / <40 | + | |
| B0 | 4 Wochen | <20 / − / >40 | − | Vergleichs- versuch |
| B1 | 4 Wochen | <20 / − / <40 | + | |
| B2 | 4 Wochen | <20 / − / <40 | + | |

x) Beurteilung des Lagerverhaltens : Das Lagerverhalten wird positiv beurteilt, wenn die Grindometerwerte nach mindestens 4 Wochen Lagerung Werte < 20 / < 35 / < 40 haben.

Speziell in Weißverschnitten kann aufgrund von Flockung der Pigmentteilchen eine erhebliche Farbverschlechterung auftreten. Die Flockung kann durch einen sogenannten Rubout aufgehoben werden. Hierbei wird wie folgt vorgegangen:

Zur Prüfung wird das gelagerte Pigment im Weißlack auf Basis Lack Alkydal F 650 und Titandioxidweißpigment Bayertitan R-KB-2 (beides Handelsprodukte der Bayer AG) in einer Pigmentvolumenkonzentration (PVK = Volumenkonzentration der Gesamtmenge an Weiß- und Buntpigment in der Bindemittelanreibung) von 10 % mit einem Gewichtsverhältnis Weißpigment : Buntpigment von 90 : 5 eingefärbt. Kurz vor dem Antrocknen des Lacks werden derart hergestellte Farben ausgerieben (rub out), wodurch die erhaltenen Pigmente in den deflockulierten Zustand überführt werden. Der farbmetrische Vergleich ($\Delta E^*$ = Gesamt- farbabstand gemäß DIN 6174, äquivalent ISO / DIN 7724, 1 - 3 drafts, CIELAB C 2 / grad) von ausgeriebenem und nicht ausgeriebenem Lack erlaubt eine Aussage über die Flockungsneigung der gelagerten Pigmente in dem betreffenden System. Hierbei sind möglichst niedrige Werte des Gesamtfarbabstands $E^*$ zwischen ausgeriebenem und nicht ausgeriebenem Lack erwünscht.

9

Tabelle 6

| Farbtonabweichung in Bindemittelanreibungen durch Flockung | | | |
|---|---|---|---|
| Beispiel | Lagerdauer | $\Delta E^*$ | |
| A0 | 6 Wochen | 25,3 | Vergleichsversuch |
| A1 | 6 Wochen | 2,1 | |
| A2 | 6 Wochen | 2,4 | |
| B0 | 4 Wochen | 26,2 | Vergleichsversuch |
| B1 | 4 Wochen | 1,7 | |
| B2 | 4 Wochen | 2,6 | |

Überraschenderweise zeigen die erfindungsgemäßen Pigmente bei der Mahlung besseres Mahlverhalten (höherer Durchsatz) als die herkömmlichen Pigmente:

Tabelle 7

| Mahlung | | |
|---|---|---|
| Beispiel | Durchsatz (Mühle) % | |
| C0 | 100 | Vergleichsversuch |
| C1 | 115 | |
| D0 | 100 | Vergleichsversuch |
| D1 | 110 | |

Pigmente werden üblicherweise als Sackware oder in Großgebinden ausgeliefert. Beim Verarbeiter müssen die Pigmente in Vorratssilos, Förder- und Dosiereinrichtungen überführt werden. Hierbei kann eine erhebliche Staubbelastung auftreten. Eine Reduzierung des Staubanfalls ist daher immer erstrebenswert.

In den folgenden Beispielen wurde das Staubverhalten in einer Staubmeßapparatur geprüft, indem 40 g Pigment auf einmal durch ein senkrecht stehendes Glasrohr von 45 mm Durchmesser über eine Fallhöhe von 1300 mm in einen 21-Glasstutzen von 120 mm Durchmesser fallen gelassen wurden. Der dabei entstehende Staub wird mittels eines Luftstroms von 1 m³ /h durch ein Glasrohr von 30 mm Durchmesser, in dem die Gasströmung ca. 40 cm/s beträgt, an einer Photozelle vorbeigeleitet. Dabei wird die durch den Staub bedingte Abnahme der Transmission gemessen und in bekannter Weise in Extinktionswerte umgerechnet. Die Extinktionswerte stellen ein direktes Maß für die Stärke der Staubentwicklung dar.

Extinktionswerte unter 0,05 charakterisieren eine sehr geringe, solche zwischen 0,05 und 0,1 eine geringe, zwischen 0,1 und 0,2 eine mäßige, zwischen 0,2 und 0,4 eine starke und über 0,4 eine sehr starke Staubentwicklung.

Tabelle 8

| Staubverhalten | | | |
|---|---|---|---|
| Beispiel | Extinktion | Staubentwicklung | |
| F10 | 0,242 | stark | Vergleichsversuch |
| F1 | 0,041 | sehr gering | |
| G10 | 1,000 | sehr stark | Vergleichsversuch |
| G1 | 0,186 | mäßig | |

Bei der Einfärbung von Kunststoffen erwartet der Verarbeiter, daß die Pigmente nicht aus grobkörnigen Agglomeraten bestehen, die bei der Einarbeitung in den Kunststoff rauhe Oberflächen und schlechte Farbqualitäten bewirken. Gewünscht ist eine glatte Oberfläche und eine gleichmäßige Farbgebung in der Kunststoffmatrix. Eine gute Dispergierbarkeit der Pigmente im Kunststoff ist daher Voraussetzung für die Einarbeitung in Kunststoffe.

Die Kunststoffverträglichkeit eines Pigments wird im nachfolgend beschriebenen Blasfolientest geprüft. Ein wichtiges Kriterium hierbei ist die Zahl der an der Kunststoffoberfläche sichtbaren Pigmentstippen.

Aus 350 g Pigment und 150 g HD-PE (high density polyethylen) mit Schmelzindex von ca. 20 wird eine Vormischung hergestellt, indem man Pigment und Kunststoffpulver in einem Plastikbeutel durch Schütteln durchmischt, durch ein 2 mm Sieb gibt und im Collinkneter bei 195°C und 60 U/min vermischt. Danach werden 500 g HD-PE mit Schmelzindex von ca. 0,5 mit 7,1 g der Vormischung vermischt, einmal bei 220°C extrudiert und zu Folien verblasen. 0,4 m$^2$ der Folie werden auf Pigmentstippen untersucht.

Die Beurteilung der Kunststoffverträglichkeit erfolgt anhand der Zahl der Stippen:

sehr gut — bei weniger als 10 Stippen
gut — bei bis zu 20 Stippen
mäßig — bei bis zu 50 Stippen
schlecht — bei mehr als 50 Stippen

Tabelle 9

| Kunststoffdispergierbarkeit nach Lagerung Blasfolientest | | | | |
|---|---|---|---|---|
| Beispiel | Lagerdauer | Stippenzahl | Beurteilung | |
| B1 | 3 Wochen | 1 | sehr gut | |
| C0 | 4 Wochen | > 100 | schlecht | Vergleichsversuch |
| C1 | 4 Wochen | ca. 30 | mäßig | |
| D1 | 3 Wochen | 1 | sehr gut | |
| H0 | ./. | 100 | schlecht | Vergleichsversuch |
| H1 | ./. | 2 | sehr gut | |

Durch die Oberflächenbeschichtung mit den erfindungsgemäßen Siliciumverbindungen wird also das Verhalten der Pigmente in Kunststoffen und Folien verbessert, und man findet auch nach mehrwöchiger Lagerung der Pigmente und anschließender Einarbeitung der Pigmente in Folien günstiges Verhalten.

Wird ein Kunststoff mit Pigmenten eingefärbt, so erwartet der Verbraucher, daß durch die Einfärbung die anderen Eigenschaften des Kunststoffs möglichst erhalten bleiben und auf jeden Fall nicht negativ beeinflußt werden.

Durch das Einfärben von Kunststoffen mit Pigmenten wird das homogene Gefüge der Polymermatrix gestört, was eine Verschlechterung der mechanischen Eigenschaften z.B. der Kerbschlagzähigkeit und der Bruchdehnung des eingefärbten Polymers gegenüber dem nicht eingefärbten Polymer zur Folge hat. Je besser das verwendete Pigment in der Polymermatrix dispergierbar ist, desto geringer ist die Beeinträchtigung der mechanischen Eigenschaften des gefüllten Polymers. Besonders schwierig ist die Dispergierung von granulierten Pigmenten, da hierbei in einem Schritt eine Grobdispergierung der Granulatteilchen und eine Feindispergierung der Pigmentagglomerate erfolgen muß.

Kerbschlagzähigkeit in Acrylnitril-Butadien-Styrol-Terpolymer (ABS):
90 Teile des ABS-Kunststoffs Novodur P2H-AT (Handelsprodukt der Bayer AG) und 10 Teile Pigment werden gemischt und einmal über einen Zweiwellenextruder bei 190°C extrudiert. Die abgezogenen Stränge werden granuliert, getrocknet und mittels einer Spritzgießmaschine bei 220°C zu Normprüfstäben verspritzt. Von je 10 Normprüfstäben wird nach DIN 53 453 die Kerbschlagzähigkeit ermittelt. Als Kontrolle dienen unpigmentierte Proben.

Tabelle 10

| Kerbschlagzähigkeit | | |
|---|---|---|
| Probe | Verbesserung der Kerbschlagzähigkeit in ABS $a_K$ im Vergleich zu Beispiel HO (kJ/m$^2$) | Beurteilung |
| H0 | 0,0 | sehr schlecht Vergleichsbeispiel |
| H1 | + 4,0 | sehr gut |
| H10 | + 3,6 | gut Vergleichsbeispiel |

Einige anorganische Pigmente haben die Eigenschaft, Feuchtigkeit aus der Atmosphäre aufzunehmen. Mit der Feuchtigkeitsaufnahme, die ja entsprechend der Lagerzeit verschieden hoch ausfällt, ändern sich auch anwendungstechnische Eigenschaften der Pigmente. Der Verarbeiter erwartet jedoch über einen Zeitraum von Monaten konstante Eigenschaften der Pigmente. Ziel des Pigmentherstellers ist es daher, die Feuchtigkeitsaufnahme zu verhindern bzw. so gering wie möglich zu halten, um diesen Einflußfaktor auf die Verarbeitungseigenschaften soweit möglich auszuschalten.

Überraschenderweise zeigte sich, daß die erfindungsgemäß beschichteten Pigmente bei Lagerung in feuchter Atmosphäre nur geringfügig Feuchtigkeit über die Gasphase aufnehmen.

Zur Untersuchung der Feuchtigkeitsaufnahme wurde das gelagerte Pigment in eine Prozellanschale geschüttet (Schütthöhe 0,5 cm) und 7 Tage in einem Exsikator bei Raumtemperatur gelagert, dessen Boden 5 cm hoch mit Wasser gefüllt war.

Tabelle 11

| Feuchtigkeitsaufnahme bei Lagerung in feuchter Atmosphäre | | | | |
|---|---|---|---|---|
| Beispiel | Lagerzeit | Gewichtszunahme in % | | Beurteilung |
| A0 | 7 Tage | > 2 | - | Vergleichsversuch |
| A1 | 7 Tage | < 0,6 | + | |
| A2 | 7 Tage | < 0,6 | + | |
| A4 | 7 Tage | < 0,6 | + | |
| A5 | 7 Tage | < 0,6 | + | |
| A6 | 7 Tage | < 0,6 | + | |
| C0 | 7 Tage | > 2,0 | - | Vergleichsversuch |
| C1 | 7 Tage | < 0,6 | + | |
| E0 | 7 Tage | > 1 | - | Vergleichsversuch |
| E1 | 7 Tage | < 1 | + | |
| E10 | 7 Tage | > 1 | - | Vergleichsversuch |

Während der Einarbeitung von Pigmenten in Kunststoffe kann infolge thermischer Beanspruchung die aufgebrachte siliciumorganische Verbindung von der Pigmentoberfläche abdiffundieren und in die Kunststoffmatrix bzw. an die Kunststoffoberfläche migrieren. Dies sollte unter allen Umständen vermieden werden, da an die Oberfläche gelangende siliciumorganische Verbindungen die Weiterverarbeitung der pigmentierten Kunststoffe (z.B. Verschweißbarkeit, Bedruckbarkeit) negativ beeinflussen können.

Mittels ESCA (Elektronenspektroskopie zur chemischen Analyse), einem ausgesprochen empfindlichen Oberflächennanalysenverfahren, wurde an mit einem erfindungsgemäßen Pigment 70 %ig gefüllten Polyethylen-Masterbatch geprüft, ob sich unter thermischer Beanspruchung während der Einarbeitung der erfindungsgemäßen Pigmente in den Kunststoff die aufgebrachte siliciumorganische Verbindung von der Pigmengtoberfläche ablöst und an die Kunststoffoberfläche migriert.

Tabelle 12

| Migrationsverhalten in eingefärbtem Kunststoff | |
|---|---|
| Beispiel | Ergebnis der ESCA-Analyse |
| F1 | kein Silicium an der Prüfkörperoberfläche |

Das Ergebnis der empfindlichen ESCA-Oberflächenanalyse zeigt, daß die erfindungsgemäßen Pigmente keine Stoffe freisetzten, die an die Oberfläche des Kunststoffes migrieren und dadurch die anwendungstechnischen Eigenschaften des eingefärbten Kunststoffes beeinflussen.

Nicht nur bei der Einarbeitung in Kunststoffe sondern generell soll ein auf die Pigmentoberfläche aufgebrachter Beschichtungsstoff fest haften. Der Verarbeiter erwartet, daß auch nach einer längeren Lagerzeit die Pigmenteigenschaften erhalten bleiben und daß nicht durch ein langsames Ablösen der Beschichtungsstoffe bei z.B. erhöhten Lagertemperaturen eine allmähliche Verschlechterung der Pigmenteigenschaften auftritt.

EP 0 373 426 B1

Zu einer weiteren Prüfung der Haftfestigkeit der Siliconöle auf der Pigmentoberfläche wird der Gewichtsverlust während einer einstündigen Erwärmung der Pigmente auf 200°C im Trockenschrank ermittelt.

Es zeigt sich, daß auch bei einer sehr starken thermischen Belastung die erfindungsgemäßen Pigmente einen deutlich niedrigeren Gewichtsverlust als mit herkömmlichen Oberflächenbeschichtungsmitteln behandelte Pigmente aufweisen. Hierin zeigt sich die wesentlich verbesserte Haftfestigkeit der Siliconöle bei den erfindungsgemäßen Pigmenten.

Tabelle 13

| Wärmetest (Gewichtsverlust) | | | | |
|---|---|---|---|---|
| Beispiel | Zusatzstoff | Zusatzmenge % | Gewichtsverlust % | |
| F10 | X2 | 0,5 | 0,10 | Vergleichsversuch |
| F2 | 2 | 0,5 | 0,05 | |

**Patentansprüche**

1. Anorganische Farb- und Magnetpigmente mit einem Gehalt von mindestens 0,1 Gew.-% und höchstens 5 Gew.-% an einem oder mehreren Polyorganosiloxanen, dadurch gekennzeichnet, daß die Polyorganosiloxane Viskositäten von 10 bis 100.000 mPa.s und eine relative Molmasse von 500 bis 500.000 aufweisen, keine reaktiven oder vernetzend wirkenden Gruppen enthalten, pro Molekül mindestens eine Si-Alkyl- und/oder Si-Aryl-Gruppe mit 9 bis 25 C-Atomen enthalten, wobei diese Gruppen zu 7 bis 70 Gew.-% im Polyorganosiloxan vorhanden sind, und die übrigen Organoreste im Polyorganosiloxan 1 bis 8 C-Atome aufweisen.

2. Anorganische Farb- und Magnetpigmente nach Anspruch 1, dadurch gekennzeichnet, daß die Polyorganosiloxane pro Molekül mindestens eine Si-Alkyl- und/oder Si-Aryl-Gruppe mit 11 bis 20 C-Atomen enthalten.

3. Anorganische Farb- und Magnetpigmente nach einem der Ansprüche 1 oder 2, dadurch gekennzeichnet, daß die Si-Alkyl- und/oder Si-Aryl-Gruppen zu 20 bis 50 Gew.-% im Polyorganosiloxan vorhanden sind.

4. Anorganische Farb- und Magnetpigmente nach einem der Ansprüche 1 bis 3, dadurch gekennzeichnet, daß die übrigen Organoreste im Polyorganosiloxan Methylreste sind.

5. Anorganische Farb- und Magnetpigmente nach einem der Ansprüche 1 bis 4, dadurch gekennzeichnet, daß die Polyorganosiloxane pro Molekül mindestens eine Si-Alkylgruppe mit einem geradkettigen Alkylrest mit 11 bis 20 C-Atomen enthalten.

6. Anorganische Farb- und Magnetpigmente nach einem der Ansprüche 1 bis 5, dadurch gekennzeichnet, daß es sich um Weißpigmente handelt.

7. Anorganische Farb- und Magnetpigmente nach einem der Ansprüche 1 bis 5, dadurch gekennzeichnet, daß es sich um Buntpigmente handelt.

8. Verfahren zur Herstellung der Farb- und Magnetpigmente gemäß einem der Ansprüche 1 bis 7, dadurch gekennzeichnet, daß die Polyorganosiloxane vor oder während der Trocknung oder vor oder während der Mahlung den Pigmenten zugegeben werden.

9. Verwendung der Pigmente gemäß einem der Ansprüche 1 bis 5 zur Einarbeitung in lipophile Medien, Toner, magnetische Aufzeichnungsmaterialien und Kunststoffe.

10. Verwendung der Pigmente gemäß einem der Ansprüche 1 bis 5 zur Einarbeitung in Lacke, Baustoffe, keramische Materialien und Dispersionsfarben.

13

**Claims**

1. Inorganic coloured and magnetic pigments having a content of at least 0.1% by weight and at most 5% by weight of one or more polyorganosiloxanes, characterized in that the polyorganosiloxanes have viscosities of 10 to 100,000 mPa.s and a relative molecular weight of 500 to 500,000, have no reactive or crosslinking groups, contain at least one $C_{9-25}$ Si-alkyl and/or Si-aryl group containing per molecule, 7 to 70% by weight of these groups being present in the polyorganosiloxane and the other organic radicals in the polyorganosiloxane containing 1 to 8 carbon atoms.

2. Inorganic coloured and magnetic pigments as claimed in claim 1, characterized in that the polyorganosiloxanes contain at least one $C_{11-20}$ Si-alkyl and/or Si-aryl group.

3. Inorganic coloured and magnetic pigments as claimed in claim 1 or 2, characterized in that 20 to 50% by weight of the Si-alkyl and/or Si-aryl groups are present in the polyorganosiloxane.

4. Inorganic coloured and magnetic pigments as claimed in any of claims 1 to 3, characterized in that the other organic radicals in the polyorganosiloxane are methyl radicals.

5. Inorganic coloured and magnetic pigments as claimed in any of claims 1 to 4, characterized in that the polyorganosiloxanes contain per molecule at least one Si-alkyl group with a linear $C_{11-20}$ alkyl radical.

6. Inorganic coloured and magnetic pigments as claimed in any of claims 1 to 5, characterized in that the pigments are white pigments.

7. Inorganic coloured and magnetic pigments as claimed in any of claims 1 to 5, characterized in that the pigments are coloured pigments.

8. A process for the production of the coloured pigments and magnetic pigments claimed in any of claims 1 to 7, characterized in that the polyorganosiloxanes are added to the pigments before or during drying or before or during grinding.

9. The use of the pigments claimed in any of claims 1 to 5 for incorporation in lipophilic media, toners, magnetic recording materials and plastics.

10. The use of the pigments claimed in any of claims 1 to 5 for incorporation in lacquers, building materials, ceramic materials and emulsion paints.

**Revendications**

1. Pigments inorganiques colorés et magnétiques ayant une teneur d'au moins 0,1 % en poids et au maximum de 5 % en poids en un ou plusieurs polyorganosiloxanes, caractérisés en ce que les polyorganosiloxanes ont des viscosités de 10 à 100 000 mPa.s et une masse molaire relative de 500 à 500 000, ne contiennent pas de groupes réactifs ou à effet réticulant, contiennent par molécule au moins un groupe Si-alkyle et/ou Si-aryle ayant 9 à 25 atomes de carbone, ces groupes étant présents en proportion de 7 à 70 % en poids dans le polyorganosiloxane, et les autres restes organiques du polyorganosiloxane présentant 1 à 8 atomes de carbone.

2. Pigments inorganiques colorés et magnétiques suivant la revendication 1, caractérisés en ce que les polyorganosiloxanes contiennent par molécule au moins un groupe Si-alkyle et/ou Si-aryle ayant 11 à 20 atomes de carbone.

3. Pigments inorganiques colorés et magnétiques suivant l'une des revendications 1 ou 2, caractérisés en ce que les groupes Si-alkyle et/ou Si-aryle sont présents en proportion de 20 à 50 % en poids dans le polyorganosiloxane.

4. Pigments inorganiques colorés et magnétiques suivant l'une des revendications 1 à 3, caractérisés en ce que les autres restes organiques présents dans le polyorganosiloxane sont des restes méthyle.

**5.** Pigments inorganiques colorés et magnétiques suivant l'une des revendications 1 à 4, caractérisés en ce que les polyorganosiloxanes contiennent par molécule au moins un groupe si-alkyle ayant un reste alkyle à chaîne droite de 11 à 20 atomes de carbone.

**6.** Pigments inorganiques colorés et magnétiques suivant l'une des revendications 1 à 5, caractérisés en ce qu'il s'agit de pigments blancs.

**7.** Pigments inorganiques colorés et magnétiques suivant l'une des revendications 1 à 5, caractérisés en ce qu'il s'agit de pigments de couleur.

**8.** Procédé de production des pigments colorés et magnétiques suivant l'une des revendications 1 à 7, caractérisé en ce que les polyorganosiloxanes sont ajoutés aux pigments avant ou pendant le séchage ou bien avant ou pendant le broyage.

**9.** Utilisation des pigments suivant l'une des revendications 1 à 5 par incorporation dans des milieux lipophiles, des toners, des supports magnétiques d'enregistrement et des matières plastiques.

**10.** Utilisation des pigments suivant l'une des revendications 1 à 5 par incorporation dans des peintures, des matériaux de construction, des matières céramiques et des couleurs dispersées.